# EUROPÄISCHE PATENTSCHRIFT

(11) **EP 2 686 645 B1**
(45) Veröffentlichungstag und Bekanntmachung des Hinweises auf die Patenterteilung: **13.04.2022**
(21) Anmeldenummer: 12718165.9
(22) Anmeldetag: 24.04.2012
(51) Int. Cl.: B65G 5/00, G01F 15/00, G05D 7/00, G05D 7/06

(54) **VERFAHREN, VERWALTUNGSVORRICHTUNG UND ERDGASSPEICHERSYSTEM FÜR DIE AUTOMATISIERTE VERWALTUNG MEHRERER DURCHFLUSSVORRICHTUNGEN**
METHOD, MANAGING DEVICE AND NATURAL GAS STORAGE SYSTEM FOR AUTOMATED MANAGEMENT OF MULTIPLE FLOW DEVICES
PROCÉDÉ, DISPOSITIF DE GESTION ET SYSTÈME DE STOCKAGE DE GAZ NATUREL POUR LA GESTION AUTOMATISÉE DE DISPOSITIFS D'ÉCOULEMENT MULTIPLES

(30) Priorität: 16.05.2011 DE 102011075857
(43) Veröffentlichungstag der Anmeldung: 22.01.2014
(73) Patentinhaber: Siemens Energy Global GmbH & Co. KG, 81739 München (DE)
(72) Erfinder: SZAJWAJ, Pawel, 40472 Düsseldorf (DE)
(86) Internationale Anmeldenummer: PCT/EP2012/057454
(87) Internationale Veröffentlichungsnummer: WO 2012/156179

(56) Entgegenhaltungen:
- EP-A2- 1 826 415
- WO-A1-92/10685
- WO-A2-2008/040338
- WO-A2-2011/053992
- US-A1- 2004 260 429

## Beschreibung

Die vorliegende Erfindung betrifft ein Verfahren für die automatisierte Verwaltung mehrerer Durchflussvorrichtungen für die Erzeugung eines Gesamtdurchflusses eines Fluides in oder aus einer Speichervorrichtung. Weiter betrifft die Erfindung eine Verwaltungsvorrichtung für die automatisierte Verwaltung der verteilten Nutzung mehrerer Durchflussvorrichtungen für die Erzeugung eines Gesamtdurchflusses eines Fluides in oder aus einer Speichervorrichtung. Bei der Speichervorrichtung handelt es sich um einen Erdgasspeicher.

Es ist bereits bekannt Speichervorrichtungen zu verwenden, um energiehaltige Fluide, insbesondere zum Beispiel Erdgas, zu speichern. Auch andere Speichermethoden, zum Beispiel die Speicherung von erwärmtem Fluid, oder unter Druck stehendem Fluid sind mit Bezug auf Speichervorrichtungen bekannt. Diese Speichervorrichtungen werden über Durchflussvorrichtungen mit dem Fluid bestückt, also Fluid in die Speichervorrichtung eingespeichert, oder aus dieser Speichervorrichtung ausgespeichert. Man kann eine solche Speichervorrichtung auch als einen Pufferspeicher bezeichnen.

Bei bekannten Speichervorrichtungen wird zur Regelung des Einspeicherns und/oder des Ausspeicherns eine Regelvorrichtung verwendet, die in der Lage ist den gewünschten Durchfluss für den Einspeichervorgang oder den Ausspeichervorgang zur Verfügung zu stellen. Der gewünschte Durchfluss wird dabei direkt der Regeleinheit vorgegeben. Darüber hinaus ist bei bekannten Speichervorrichtungen häufig eine Vielzahl von Durchflussvorrichtungen vorgesehen. Demnach ist es eine weitere Aufgabe der Regelvorrichtung bekannter Speichervorrichtungen, dass diese in der Lage ist die jeweiligen Durchflussvorrichtungen hinsichtlich des Teilvolumenstroms durch die jeweilige Durchflussvorrichtung zu regeln. Dies bedeutet, dass die Regelvorrichtung für entsprechende Rechenalgorithmen ausgelegt sein muss, um, in Abhängigkeit von der gewünschten Gesamtdurchflussmenge, die jeweilige Durchflussvorrichtung für den Einspeichervorgang und den Ausspeichervorgang auszuwählen sowie den jeweiligen Volumenstrom zu regeln. Eine Eingabe neuer Werte für die Regelung ist im laufenden Prozess nur schwer möglich, da ein Eingriff in laufende Prozesse, insbesondere in laufende Rechenalgorithmen erfolgen muss.

Nachteilig ist bei bekannten Speichervorrichtungen, dass diese hinsichtlich der Flexibilität während des Betriebs der Regelung des Einspeicher- und Ausspeicherbetriebes als gering zu bewerten sind. Darüber hinaus ist es nachteilig, dass die Regelung einen hohen Rechenaufwand benötigt, der die Regelung des Einspeicher- und des Ausspeichervorgangs vornimmt.

Dementsprechend ist es notwendig, dass die Regelungsvorrichtung bekannter Speichervorrichtungen entsprechend komplex und damit kostenintensiv ausgeführt sein muss.

Aus der US 2004/0260429 A1 ist ein unterbrechungsgesteuertes System, für z.B. ein Farbsprühsteuerungssystem, mit einem Laufzeitmodul bekannt, um die Kommunikation zwischen Softwareobjekten zu ermöglichen und das vom Objekt erzeugte Unterbrechungssignal während der Ausführung der Steuerung zu verarbeiten.

Aus der WO 2011/053992 A2 ist ein Verfahren zur Kühlung eines Rechenzentrums bekannt, bei dem die Austrittslufttemperatur höher als im Sollwert sein muss, indem Wasser über ein Kühlaggregat strömt, das wärmer als die vorgegebene Wasservorlauftemperatur ist.

Aus der WO 2008/040338 A2 ist ein Verfahren für die automatisierte Verwaltung mehrerer Durchflussvorrichtungen für die Erzeugung eines Gesamtdurchflusses eines Fluides in Bezug auf ein Erdgasspeichersystem bekannt, wobei für die Durchflussvorrichtungen Soll-Werte vorgegeben werden, die sich auf deren Durchflussmengen beziehen.

Es ist Aufgabe der vorliegenden Erfindung ein Verfahren zur automatisierten Verwaltung mehrerer Durchflussvorrichtungen für die Erzeugung eines Gesamtdurchflusses eines Fluides in oder aus einer Speichervorrichtung zur Verfügung zu stellen, welches die voranstehend genannten Probleme löst. Auch Aufgabe der vorliegenden Erfindung ist es, eine Verwaltungsvorrichtung für eine diesem Verfahren entsprechende automatisierte Verwaltung zur Verfügung zu stellen. Insbesondere ist es Aufgabe der vorliegenden Erfindung mittels eines solchen erfindungsgemäßen Verfahrens und einer solchen erfindungsgemäßen Verwaltungsvorrichtung für die automatisierte Verwaltung mehrerer Durchflussvorrichtungen für die Erzeugung eines Gesamtdurchflusses eines Fluides in oder aus einer Speichervorrichtung die Eingabe neuer Soll-Werte auch im laufenden Betrieb einer Regelung durchführen zu können, und gleichzeitig die Komplexität einer nachgeordneten Regeleinheit zur reduzieren.

Gelöst wird die voranstehende Aufgabe mit Hilfe eines Verfahrens mit den Merkmalen des unabhängigen Anspruchs 1, durch eine Verwaltungsvorrichtung mit den Merkmalen des unabhängigen Anspruches 7. Weitere Merkmale und Details der Erfindung ergeben sich aus den Unteransprüchen. Dabei gelten Merkmale, die im Zusammenhang mit der erfindungsgemäßen Verwaltungsvorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Ein erfindungsgemäßes Verfahren dient für die automatisierte Verwaltung mehrerer Durchflussvorrichtungen für die Erzeugung eines Gesamtdurchflusses eines Fluides gemäß dem Anspruch 1.

Ein erfindungsgemäßes Verfahren trennt also die Eingabe und die Verwaltung der Soll-Werte voneinander, wie auch die Eingabe und die Verwaltung von der Steuerung und/oder Regelung der Durchflussvorrichtungen nochmals getrennt sind. Es entstehen demnach zwei bzw. drei voneinander separate Verfahrensbestandteile, nämlich das Eingeben in die Eingabeeinheit, das Übergeben an die Verwaltungseinheit und das Verwenden bei der Steuerung und/oder der Regelung.

Durch ein erfindungsgemäßes Verfahren können die Soll-Werte in der Eingabeeinheit vollkommen unabhängig von der Verwaltungseinheit und insbesondere unabhängig von der Steuerung und/oder der Regelung der Durchflussvorrichtung eingegeben werden. Das bedeutet, dass die Eingabe zu jedem Zeitpunkt, also insbesondere auch während des laufenden Steuerungs- und/oder Regelungsvorgangs durchgeführt werden kann. Der Betreiber eines erfindungsgemäßen Verfahrens ist somit zeitlich hinsichtlich der Eingabe der Sollwerte für die Durchflussvorrichtungen frei.

Die Übergabe der Soll-Werte an die Verwaltungseinheit erweitert diese Unabhängigkeit von der Steuerung und/oder Regelung. So kann auf diese Weise die Verwaltungseinheit die Soll-Werte für die Durchflussvorrichtungen speichern und für die Steuerung und/oder Regelung vorhalten. Die Steuerung und/oder Regelung durch eine Regelungsvorrichtung muss dementsprechend keine eigene Verwaltung der einzelnen Durchflussvorrichtungen durchführen, sondern kann auf die Verwaltungseinheit zurückgreifen. Aufwendige Rechenalgorithmen in der Regelungsvorrichtung können auf diese Weise vermieden werden. Vielmehr dient die Verwaltungseinheit dazu in kostengünstiger und einfacher Weise die Soll-Werte für die Steuerung und/oder Regelung, insbesondere eine Regelungsvorrichtung, zur Verfügung zu stellen.

Unter Soll-Werten für die Durchflussvorrichtungen sind im Rahmen der vorliegenden Erfindung insbesondere ein Durchfluss-Sollwert für die jeweilige Durchflussvorrichtung sowie die Priorität jeder Durchflussvorrichtung zu verstehen. Die Priorität einer Durchflussvorrichtung ist dabei die Wertigkeit der Durchflussvorrichtung hinsichtlich der Auswahl bei deren Verwaltung. Das bedeutet, dass eine Durchflussvorrichtung mit niedriger Prioritätszahl, also zum Beispiel 1, 2 oder 3, als erstes, zweites oder drittes ausgewählt wird. Durchflussvorrichtungen mit höheren Prioritätszahlen haben dementsprechend eine nachgeordnete Auswahlpriorität bei der Verwaltung derselben.

Eine Durchflussvorrichtung ist bei der Durchführung eines erfindungsgemäßen Verfahrens insbesondere ein Verdichter und/oder ein Ventil, also allgemein ein Stellorgan, mit dessen Hilfe der Durchfluss durch eine Durchflussvorrichtung eingestellt werden kann. Dabei kann die Einstellung sowohl als Steuerung, als auch als Regelung erfolgen.

Die Eingabeeinheit und die Verwaltungseinheit bei der Durchführung eines erfindungsgemäßen Verfahrens sind vorzugsweise voneinander getrennte Einheiten. Diese können sowohl strukturell in unterschiedlichen Bauteilen vorgesehen sein, wie auch in einer Softwareapplikation als unterschiedliche Softwaremodule. Auf diese Weise kann ein erfindungsgemäßes Verfahren zum Beispiel als Softwaremodul in einer Steuerprogrammierung in separater Weise vorgesehen sein.

Die Speichervorrichtungen bei erfindungsgemäßen Verfahren sind Erdgasspeicher. Das Fluid ist somit ein Erdgas.

Die Eingabeeinheit und die Verwaltungseinheit sind für ein erfindungsgemäßes Verfahren vorteilhafter Weise derart ausgestaltet, dass die Eingabe der Soll-Werte und die Übergabe der Soll-Werte in einer tabellarischen Form erfolgt. Dabei ist die tabellarische Form insbesondere eine Matrix, in welcher für jede Durchflussvorrichtung ein oder mehrere Soll-Werte zugeordnet oder zuordenbar sind.

Die einzelnen Durchflussvorrichtungen für die Verwendung eines erfindungsgemäßen Verfahrens sind vorzugsweise im Wesentlichen gleichartig. Dabei kann für jede Durchflussvorrichtung ein einzigartiger Sollwert zugeordnet werden, welcher durch die Gleichartigkeit der Durchflussvorrichtungen ein erfindungsgemäßes Verfahren noch weiter vereinfacht.

Der Gesamtdurchfluss kann sowohl in die Eingabeeinheit, als auch in die Verwaltungseinheit eingegeben werden. Jedoch ist es auch möglich, dass die Vorgabe eines Gesamtdurchflusses in einer davon separaten zentralen Einheit erfolgt, sodass sowohl in der Eingabeeinheit, als auch in der Verwaltungseinheit auf diese zentrale Einheit hinsichtlich des Wertes für den Gesamtdurchfluss zurückgegriffen werden kann. Dieser dient darüber hinaus vorzugsweise für die Ausführung der Steuerung und der Regelung, sodass über die Verwaltungseinheit und die Regeleinheit ein Rückgriff auf die zentrale Einheit und den Gesamtdurchfluss möglich ist.

Die Steuerung und/oder Regelung kann ein An- oder Abwählen einzelner Durchflussvorrichtungen unabhängig von einem ansonsten und am Stand der Technik notwendigen Rechenalgorithmus durchführen. Es reicht aus, wenn zur Steuerung oder Regelung auf die Verwaltungseinheit und die dort vorliegenden Soll-Werte der einzelnen Durchflussvorrichtungen zurückgegriffen wird und diese Daten ohne weitere Adaptierung für die Steuerung oder Regelung Verwendung finden. Auf diese Weise kann das Ziel erreicht werden, dass der Gesamtdurchfluss beim Einspeichern- und/oder Ausspeichern möglichst im Wesentlichen konstant und insbesondere möglichst nahe bei dem vorgegebenen Gesamtdurchfluss liegt.

Ein erfindungsgemäßes Verfahren umfasst, dass die in die Eingabeeinheit eingegeben Soll-Werte sich jeweils auf die folgenden Parameter beziehen:
- Durchflussmenge durch eine Durchflussvorrichtung, und
- Priorität einer Durchflussvorrichtung.

Hinsichtlich der Priorität und der Durchflussmenge sind voranstehend bereits ausführliche Erläuterungen angeführt worden. Es handelt sich dabei insbesondere um eine klare Vorgabe hinsichtlich der prioritätsgesteuerten Nutzung der einzelnen Durchflussvorrichtungen. Dabei ist darauf zu achten, dass die Priorität möglichst lückenlos für alle Durchflussvorrichtungen eindeutig zuordenbar ist. Die Durchflussmenge ist insbesondere pro Zeiteinheit für jede Durchflussvorrichtung angegeben, also zum Beispiel in der Einheit [m³/h].

Ein weiterer Vorteil ist es, dass bei einem erfindungsgemäßen Verfahren vor der Übergabe der eingegebenen Soll-Werte für die Durchflussvorrichtungen eine Prüfung dieser eingegebenen Soll-Werte, insbesondere auf deren Plausibilität, in der Eingabeeinheit und die Übergabe der Soll-Werte an die Verwaltungseinheit in Abhängigkeit des Ergebnisses dieser Prüfung erfolgen. Die Überprüfung der Sollwerte und die Übergabe in Abhängigkeit des Ergebnisses dieser Prüfung bringen den Vorteil mit sich, dass die Wahrscheinlichkeit für die Übergabe falscher, insbesondere unplausibler, Werte an die Verwaltungseinheit reduziert wird. Eine Verwaltungseinheit mit Soll-Werten, die zu unsinnigen Steuer- und/oder Regelergebnissen der Durchflussvorrichtungen führen würde, kann auf diese Weise im Wesentlichen vermieden werden. Bei der Plausibilität wird zum Beispiel die Doppelvergabe einer Priorität geprüft und verhindert. Auch Lücken in der Prioritätsliste können auf diese Weise vermieden werden. Weiter ist es möglich, dass hinsichtlich der Durchflussmenge einzelner Durchflussvorrichtungen unmögliche Werte, also Durchflussmengen pro Zeiteinheit, die von der jeweiligen Durchflussvorrichtung nicht zur Verfügung gestellt werden kann, vermieden werden.

Auch vorteilhaft ist es, wenn im Rahmen der vorliegenden Erfindung die Durchflussvorrichtungen hinsichtlich der übergebenen Soll-Werte in der Verwaltungseinheit überwacht werden. Es handelt sich also um eine Rückkopplung der Durchflusswerte der einzelnen Durchflussvorrichtungen an die Verwaltungseinheit. So kann in der Verwaltungseinheit zum Beispiel in tabellarischer Form eine zusätzliche Spalte vorgesehen sein, bei welcher für jede Durchflussvorrichtung die Rückkopplung der tatsächlichen Durchflusswerte aufgelistet ist. Anhand der Verwaltungseinheit und der zusätzlichen Rückkopplungswerte kann die Steuerung und/oder Regelung über die Verwaltungseinheit auch auf diese Realwerte zurückgreifen und in Kombination mit den vorgegebenen Soll-Werten der Verwaltungseinheit das An- oder Abwählen der nächst höheren beziehungsweise nächst niedrigeren Durchflussvorrichtung ausführen. Insbesondere ist dabei eine kontinuierliche Überwachung der tatsächlichen Parameter der Durchflussvorrichtungen möglich.

Ebenfalls von Vorteil kann es sein, wenn bei einem erfindungsgemäßen Verfahren der Gesamtdurchfluss separat von der Eingabeeinheit und/oder der Verwaltungseinheit vorgebbar ist und in der Eingabeeinheit bei der Eingabe der Soll-Werte und/oder in der Verwaltungseinheit bei der Verwaltung der Durchflussvorrichtung verwendet wird. Diese Verwendung ist insbesondere ein Vergleich der bisher gültigen Soll-Werte mit den neuen Soll-Werten mit Bezug auf den Gesamtdurchfluss. So kann in der Verwaltung der Gesamtdurchfluss direkt den einzelnen Durchflussvorrichtungen bei deren Auswahl zugeordnet werden, sodass in Summe der Gesamtdurchfluss mit der von der Verwaltungseinheit durch die Prioritäten vorgeschlagenen angewählten Durchflussvorrichtungen erzielbar wird.

In der Eingabeeinheit können neue Eingaben, welche alte bisher geltende Eingaben ersetzen sollen, anhand des zur Verfügung gestellten Gesamtdurchflusses bewertet und insbesondere für den eingebenden Bearbeiter visualisiert werden. Diese Visualisierung erfolgt zum Beispiel in der Anzeige der durch die neuen Eingaben erzielbaren Änderungen und den Voraussetzungen des vorgegebenen Gesamtdurchflusses. So werden zum Beispiel neu hinzuzuwählende Durchflussvorrichtungen angezeigt, beziehungsweise die durch die neuen Eingaben abzuwählenden Durchflussvorrichtungen visualisiert.

Ebenfalls vorteilhaft ist es, dass bei einem erfindungsgemäßen Verfahren nach der Eingabe der Soll-Werte ein Sortierschritt in der Eingabeeinheit bezogen auf die eingegeben Soll-Werte durchgeführt wird. Der Sortierschritt ermöglicht es, dass insbesondere hinsichtlich der Priorisierung der einzelnen Durchflussvorrichtungen eine Sortierung durchgeführt wird. Mit anderen Worten sind die einzelnen Durchflussvorrichtungen nicht mehr hinsichtlich ihrer Durchnummerierung sortiert, sondern vielmehr aufsteigend oder absteigend hinsichtlich der variablen, nämlich neu eingegebenen, Priorisierung. Die Priorisierung und die Sortierung stimmen nach der Durchführung des Sortierschrittes überein. Dies führt dazu, dass eine sortierte, insbesondere verkettete, Liste an die Verwaltungseinheit übergeben und damit der Steuerung und/oder Regelung der Durchflussvorrichtungen zur Verfügung gestellt wird. Auf diese Weise ist es möglich, dass die Steuer- und/oder Regeleinheit hinsichtlich der Berechnungsalgorithmen noch weiter entlastet wird. So genügt es hinsichtlich der notwendigen Abwahl oder der notwendigen Anwahl einer weiteren Durchflussvorrichtung die nächst höhere beziehungsweise nächst niedrigere, in der nächsten Zeile bei einer tabellarischen Auflistung, zu verwenden. Eine Suche nach der nächsten Priorität in einer ungeordneten Liste kann auf diese Weise vermieden werden. So wird der Rechenaufwand reduziert, die Steuerung und/oder Regelung beschleunigt und gleichzeitig die notwendige Komplexität für die Ausführung einer Regeleinheit reduziert.

Ebenfalls von Vorteil ist es, wenn bei einem erfindungsgemäßen Verfahren eine wiederholte Durchführung der Verfahrensschritte die vor der Wiederholung an die Verwaltungseinheit übergebenen Soll-Werte überschreibt oder teilweise überschreibt. Ein teilweises Überschreiben erfolgt dabei insbesondere bei Teiländerungen, also wenn nur einzelne Soll-Werte verändert worden sind. So werden insbesondere nur die veränderten Soll-Werte bei der Übergabe in der Verwaltungseinheit überschrieben. Um eine solche Prüfung obsolet zu machen, kann es auch vorteilhaft sein, wenn unabhängig von der Anzahl der Änderungen bei der neuen Eingabe neuer Soll-Werte die gesamten Soll-Werte der Verwaltungseinheit überschrieben werden. So kann sichergestellt werden, dass sich Fehler bei der Übergabe in vergangenen Durchführungen erfindungsgemäßer Verfahrensschritte nicht für die Zukunft auswirken, sondern durch das vollständige Überschreiben zu jedem Zeitpunkt sozusagen ein "Reset" auf die aktuell gültigen Soll-Werte der Eingabeeinheit erfolgt. Insbesondere ist auf diese Weise ein Ändern der Soll-Werte während des Betriebs der Anlage möglich, sodass eine höhere Flexibilität durch ein erfindungsgemäßes Verfahren bei der Einspeicherung und/oder Ausspeicherung in eine Speichervorrichtung erzielt werden kann.

Auch kann es vorteilhaft sein, wenn bei einem erfindungsgemäßen Verfahren die Soll-Werte der Eingabeeinheit und/oder der Verwaltungseinheit mittels einer Anzeigevorrichtung angezeigt werden oder angezeigt werden können. Zusätzlich zur Anzeigevorrichtung oder funktionsidentisch mit derselben kann auch eine Eingabevorrichtung vorhanden sein. Die Anzeigevorrichtung ist zum Beispiel ein Monitor, insbesondere ein Display, zum Beispiel in der Leitwarte einer Prozesssteuerung. Dabei ist die Anzeigevorrichtung insbesondere ausgestaltet, um direkt in dieselbe die gewünschten Soll-Werte einzugeben. Dabei kann die Visualisierung insbesondere in tabellarischer Form erfolgen. Insbesondere werden sowohl die Eingabeeinheit, als auch die Verwaltungseinheit hinsichtlich der darin vorliegenden Soll-Werte visualisiert.

Ein weiterer Gegenstand der vorliegenden Erfindung ist eine Verwaltungsvorrichtung für die automatisierte Verwaltung der verteilten Nutzung mehrerer Durchflussvorrichtungen für die Erzeugung eines Gesamtdurchflusses eines Fluides gemäß dem Anspruch 7.

Bei einer erfindungsgemäßen Verwaltungsvorrichtung können mehrere Eingabeeinheiten vorhanden sein. Diese sind insbesondere für unterschiedliche Einspeichervorgänge ausgebildet, zum Beispiel Einspeichern, Ausspeichern oder das Speichern entlang von unterschiedlichen Speicherwegen. Somit ist es möglich für die unterschiedlichen Speichervorgänge unterschiedliche Eingabeeinheiten vorzusehen, zwischen welcher das Bedienpersonal umschalten kann.

Die Eingabe kann zum Beispiel mit Hilfe einer Tastatur erfolgen. Zur Kommunikation untereinander sind die einzelnen Einheiten in signalkommunizierender Weise verbunden. Dies ist also insbesondere eine Datenverbindung, die entweder über direkte Signalleitungen oder eine Funkverbindung erfolgen kann. Vorzugsweise ist die Verwaltungsvorrichtung zumindest teilweise in einer Speichereinheit eines Computers vorgesehen, sodass über einzelne Softwaremodule die Verwaltungsvorrichtung ausgebildet werden kann. Eine erfindungsgemäße Verwaltungsvorrichtung ist insbesondere derart ausgebildet, dass sie zur Ausführung eines erfindungsgemäßen Verfahrens dient. Dabei können durch eine erfindungsgemäße Verwaltungsvorrichtung die gleichen Vorteile erzielt werden, wie sie ausführlich hinsichtlich eines erfindungsgemäßen Verfahrens erläutert worden sind.

Die Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen:
- Figur 1: eine Ausführungsform einer visualisierten tabellarischen Ausführung für ein erfindungsgemäßes Verfahren und
- Figur 2: eine Ausführungsform einer erfindungsgemäßen Verwaltungsvorrichtung.

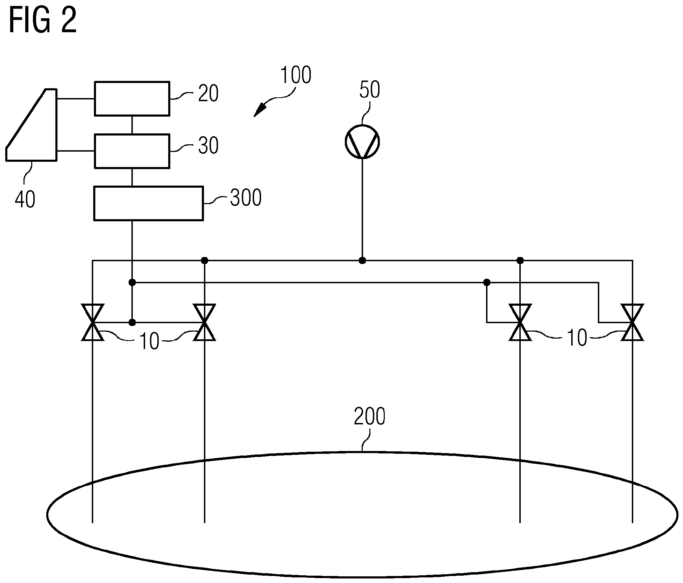

In Figur 2 ist schematisch eine Speichervorrichtung 200 dargestellt. Diese kann zum Beispiel ein Hohlraum in einer Gesteinsformation sein oder aber ein Behälter, der zur Speicherung eines Fluides, insbesondere eines Gases, ausgelegt ist. Mit dem Innenvolumen der Speichervorrichtung 200 stehen über Rohrverbindungen - installiert in Bohrlöchern - einzelne Durchflussvorrichtungen 10 in fluidkommunizierender Verbindung. Die Durchflussvorrichtungen 10 sind bei dieser Ausführungsform als Ventile ausgebildet. Um Fluid, insbesondere Erdgas, in die Speichervorrichtung 200 einzuspeichern, ist zusätzlich ein Verdichter 50 vorhanden. Dieser kann mit einer nicht dargestellten Erdgasquelle fluidkommunizierend verbunden sein und über die Verdichterfunktion zum Einspeichern Erdgas durch die geöffneten Ventile der Durchflussvorrichtungen 10 in die Speichervorrichtung 200 einführen. In umgekehrter Betriebsweise kann der Verdichter 50 dazu dienen aus der Speichervorrichtung 200 über die Durchflussvorrichtung 10 in Form von geöffneten Ventilen Erdgas auszuspeichern. Jedoch kann auch ohne den Verdichter 50 der Druck des Fluides in der jeweiligen Durchflussvorrichtung für das Einspeichern und/oder das Ausspeichern verwendet werden.

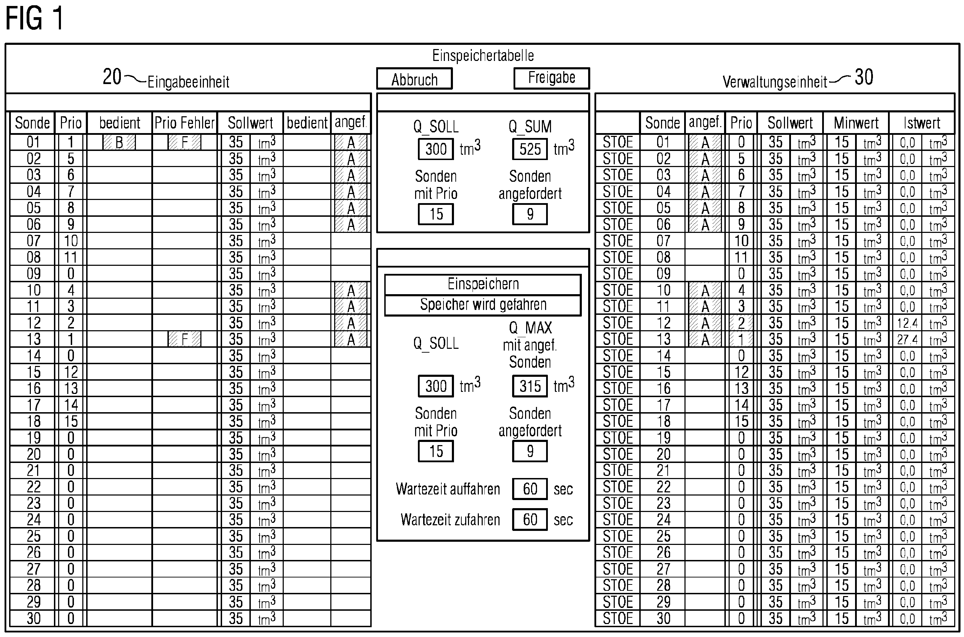

Bei der schematisch dargestellten Ausführungsform der Figur 2 ist für die Speichervorrichtung 200 eine Verwaltungsvorrichtung 100 vorgesehen. Diese weist zwei voneinander separate Einheiten, nämlich eine Eingabeeinheit 20 und eine Verwaltungseinheit 30 auf. Sowohl Eingabeeinheit 20, als auch Verwaltungseinheit 30 sind signalkommunizierend mit einer Anzeigevorrichtung 40 verbunden. Die Anzeigevorrichtung 40 ist insbesondere ein Monitor, bevorzugt ein berührungsempfindlicher Monitor, über welchen auch eine Dateneingabe erfolgen kann. Der Bediener der Speichervorrichtung 200 kann über eine solche Anzeigevorrichtung 40, die insbesondere als Eingabevorrichtung ausgebildet ist, Soll-Werte in die Eingabeeinheit 20 eingeben. Diese werden an die Verwaltungseinheit 30 übergeben und dort für die Verwaltung der Durchflussvorrichtungen 10 der Regelvorrichtung 300 zur Verfügung gestellt. Mit Bezug auf die Dateneingabe und die Kommunikation zwischen Eingabeeinheit 20 und Verwaltungseinheit 30 wird als Beispiel auf die Ausführungsform der Figur 1 verwiesen.

In Figur 1 ist eine Visualisierungsmöglichkeit für ein erfindungsgemäßes Verfahren dargestellt, welche zum Beispiel auf der Anzeigevorrichtung 40 angezeigt werden kann. Es handelt sich um voneinander getrennte Eingabeeinheit 20 und Verwaltungseinheit 30, welche gemeinsam eine Einspeichertabelle ergeben. Die Eingabeeinheit weist in tabellarischer Form die einzelnen, als Sonden bezeichneten, Durchflussvorrichtungen 10 auf, welche mit Soll-Werten hinsichtlich der Priorität ("Prio") versehen werden können. Diese Priorität ist variabel. Darüber hinaus wird jeweils ein Soll-Wert hinsichtlich des Durchflusses durch die einzelnen Durchflussvorrichtungen 10 vorgegeben, welcher ebenfalls in der tabellarischen Form vorgesehen ist. Diese beiden Werte werden hinsichtlich ihrer Plausibilität überprüft, sodass bei den eingegebenen Werten der vorliegenden beispielhaften Darstellung ein Fehler erkannt worden ist. So liegt bei der Sonde mit der Nummer 1 und bei der Sonde mit der Nummer 13 die Doppelbelegung mit der Priorität 1 vor. Dies muss behoben werden, bevor eine Übergabe der eingegebenen Soll-Werte an die Verwaltungseinheit 30 erfolgt.

In Figur 1 ist die Verwaltungseinheit 30 bereits aus einem vorhergehenden Verfahrensdurchführungsschritt mit Soll-Werten versehen. Auch hier finden sich die einzelnen Sondennummerierungen mit der zugeordneten Priorität und einem entsprechenden Soll-Wert für die Durchflussmenge der einzelnen Durchflussvorrichtungen 10. Darüber hinaus sind Minimalwerte sowie Ist-Werte als Rückkopplung von den einzelnen Durchflussvorrichtungen 10 in tabellarischer Form in der Verwaltungseinheit 30 vorgesehen.

Unabhängig von Eingabeeinheit 20 und Verwaltungseinheit 30 ist eine zentrale Einheit vorgesehen, die eine Soll-Durchflussmenge als Gesamtdurchfluss eines Fluides zur Verfügung stellt. In Abhängigkeit dieser Gesamtdurchflussmenge wird in der Verwaltungseinheit zusätzliche Sonden an- oder abgewählt, um diese Gesamtdurchflussmenge zu erzielen.

Weiter besteht in der Eingabeeinheit 20 eine zusätzliche Rückkopplungsfunktion. So wird bei der Änderung von Soll-Werten unter dem Stichwort "bedient" dargestellt, welche Änderungen an der Anwahl einzelner Durchflussvorrichtungen 10 durchgeführt werden, wenn die eingegebenen Soll-Werte an die Verwaltungseinheit 30 übergeben werden sollten.

Es ist darauf hinzuweisen, dass bei der Ausführungsform der Figur 1 die einzelnen Durchflussvorrichtungen 10 als Sonde bezeichnet sind, wobei dabei darunter insbesondere Durchflussventile für die Durchflussvorrichtungen 10 zu verstehen sind.

Darüber hinaus könne die verschiedenen Komponenten, d.h. die Durchflussvorrichtungen 10, der Verdichter 50 und/oder die Speichervorrichtung 200 Sensoren aufweisen, um verschiedene Informationen zu liefern, z.B. um die aktuelle Durchflussmenge einer der Durchflussvorrichtungen 10 oder um den aktuellen Füllstand der Speichervorrichtung 200 zu ermitteln. Diese Daten können insbesondere von der Verwaltungseinheit 30 ausgewertet und überwacht werden.

Die voranstehenden Ausführungsformen beschreiben die vorliegende Erfindung ausschließlich anhand von Beispielen.

Die Erfindung wird durch die angefügten Patentansprüche definiert.

## Patentansprüche

1. Verfahren für die automatisierte Verwaltung mehrerer Durchflussvorrichtungen (10) für die Erzeugung eines Gesamtdurchflusses eines Fluides in eine und/oder aus einer als Erdgasspeichersystem ausgebildeten Speichervorrichtung (200), aufweisend die folgenden Schritte:
- Eingabe von Soll-Werten für die Durchflussvorrichtungen (10) in eine Eingabeeinheit (20),
- Übergabe der eingegebenen Soll-Werte an eine Verwaltungseinheit (30), und
- Verwendung der übergebenen Soll-Werte der Verwaltungseinheit (30) für die Verwaltung der Durchflussvorrichtungen (10) bei deren Steuerung und/oder Regelung,
wobei die in die Eingabeeinheit (20) eingegebenen Soll-Werte sich jeweils auf die folgenden Parameter beziehen:
- Durchflussmenge durch eine der Durchflussvorrichtungen (10), und
- Priorität einer der Durchflussvorrichtungen (10), wobei vor der Übergabe der eingegebenen Soll-Werte für die Durchflussvorrichtungen (10) eine Prüfung dieser eingegebenen Soll-Werte in der Eingabeeinheit (20) und die Übergabe der Soll-Werte an die Verwaltungseinheit (30) in Abhängigkeit des Ergebnisses dieser Prüfung erfolgen,
wobei nach der Eingabe der Soll-Werte ein Sortierschritt in der Eingabeeinheit (20) bezogen auf die eingegebenen Soll-Werte durchgeführt wird.

2. Verfahren nach Anspruch 1, wobei eine Prüfung der eingegebenen Soll-Werte für die Durchflussvorrichtung (10) auf deren Plausibilität erfolgt.

3. Verfahren nach mindestens einem der vorhergehenden Ansprüche, **dadurch gekennzeichnet, dass** die Durchflussvorrichtungen (10) hinsichtlich der übergebenen Soll-Werte in der Verwaltungseinheit (30) überwacht werden.

4. Verfahren nach mindestens einem der vorhergehenden Ansprüche, **dadurch gekennzeichnet, dass** der Gesamtdurchfluss separat von der Eingabeeinheit (20) und/oder der Verwaltungseinheit (30) vorgebbar ist und in der Eingabeeinheit (20) bei der Eingabe der Soll-Werte und/oder in der Verwaltungseinheit (30) bei der Verwaltung der Durchflussvorrichtungen (10) verwendet wird.

5. Verfahren nach mindestens einem der vorhergehenden Ansprüche, **dadurch gekennzeichnet, dass** eine wiederholte Durchführung der Verfahrensschritte die vor der Wiederholung an die Verwaltungseinheit (30) übergebenen Soll-Werte überschreibt oder teilweise überschreibt.

6. Verfahren nach mindestens einem der vorhergehenden Ansprüche, **dadurch gekennzeichnet, dass** die Soll-Werte der Eingabeeinheit (20) und/oder der Verwaltungseinheit (30) auf einer Anzeigevorrichtung (40) angezeigt werden oder angezeigt werden können.

7. Verwaltungsvorrichtung (100) eines Erdgasspeichers für die automatisierte Verwaltung der verteilten Nutzung mehrerer Durchflussvorrichtungen (10) für die Erzeugung eines Gesamtdurchflusses eines Fluides in und/oder aus einer Speichervorrichtung (200), aufweisend zumindest eine Eingabeeinheit (20) für die Eingabe von Soll-Werten für die Durchflussvorrichtungen (10), wenigstens eine Verwaltungseinheit (30), an die die eingegebenen Soll-Werte übergeben werden können, um in deren Abhängigkeit die Verwaltung der Durchflussvorrichtungen (10) zu deren Steuerung und/oder Regelung durchführen zu können, wobei diese für die Ausführung eines Verfahrens mit den Merkmalen eines der Ansprüche 1 bis 6 ausgebildet ist.

8. Erdgasspeichersystem mit einer Verwaltungsvorrichtung (100) nach Anspruch 7.

## Claims

1. Method for the automated management of a plurality of throughflow apparatuses (10) for producing a total throughflow of a fluid into and/or out of a storage apparatus (200) designed as a natural gas storage system, having the following steps:
- inputting setpoints for the throughflow apparatuses (10) into an input unit (20),
- transferring the input setpoints to a management unit (30), and
- using the transferred setpoints of the management unit (30) to manage the throughflow apparatuses (10) in the open-loop control and/or closed-loop control thereof,
wherein the setpoints input into the input unit (20) respectively relate to the following parameters:
- throughflow quantity through one of the throughflow apparatuses (10),
- priority of one of the throughflow apparatuses (10), wherein, before the transfer of the input setpoints for the throughflow apparatuses (10), they are checked in the input unit (20), and the setpoints are transferred to the management unit (30) as a function of the result of this checking, wherein, after the inputting of the setpoints, a sorting step is carried out with reference to the input setpoints in the input unit (20).

2. Method according to Claim 1, wherein the input setpoints for the throughflow apparatus (10) are checked for their plausibility.

3. Method according to at least one of the preceding claims, **characterized in that** the throughflow apparatuses (10) are monitored with regard to the transferred setpoints in the management unit (30).

4. Method according to at least one of the preceding claims, **characterized in that** the total throughflow can be prescribed separately by the input unit (20) and/or the management unit (30), and is used in the input unit (20) for inputting the setpoints, and/or in the management unit (30) for managing the throughflow apparatuses (10).

5. Method according to at least one of the preceding claims, **characterized in that** a repeated carrying out of the method steps overwrites or partially overwrites the setpoints transferred to the management unit (30) before the repetition.

6. Method according to at least one of the preceding claims, **characterized in that** the setpoints of the input unit (20) and/or the management unit (30) are or can be displayed on a display apparatus (40).

7. Management apparatus (100) of a natural gas storage reservoir for the automated management of the distributed use of a plurality of throughflow apparatuses (10) for producing a total throughflow of a fluid into and/or out of a storage apparatus (200), having
at least one input unit (20) for inputting setpoints for the throughflow apparatuses (10),
at least one management unit (30) to which the input setpoints can be transferred in order as a function thereof to be able to carry out the management of the throughflow apparatuses (10) so as to perform open-loop and/or closed-loop control on them,
wherein said management apparatus is designed to carry out a method having the features of one of Claims 1 to 6.

8. Natural gas storage system having a management apparatus (100) according to Claim 7.

## Revendications

1. Procédé de gestion automatisé de plusieurs dispositifs (10) d'écoulement pour la production d'un écoulement d'ensemble d'un fluide, dans un dispositif (200) de stockage constitué sous la forme d'un système de stockage de gaz naturel, comportant les stades suivants :
- entrée de valeurs de consigne pour les dispositifs (10) d'écoulement dans une unité (20) d'entrée,
- transmission des valeurs de consigne entrées à une unité (30) de gestion, et
- utilisation des valeurs de consigne entrées de l'unité (30) de gestion, pour la gestion des dispositifs (10) d'écoulement lors de leur commande et/ou régulation,
dans lequel les valeurs de consigne entrées dans l'unité (20) d'entrée se rapportent respectivement aux paramètres suivants :
- débit dans l'un des dispositifs (10) d'écoulement, et
- priorité de l'un des dispositifs (10) d'écoulement,
dans lequel, avant la transmission des valeurs de consigne entrées, pour les dispositifs (10) d'écoulement, on effectue un contrôle de ces valeurs de consigne entrées dans l'unité (20) d'entrée et on effectue la transmission des valeurs de consigne à l'unité (30) de gestion en fonction du résultat de ce contrôle,
dans lequel, après l'entrée des valeurs de consigne, on effectue un stade de tri, dans l'unité (20) d'entrée, rapporté aux valeurs de consigne entrées.

2. Procédé suivant la revendication 1, dans lequel on contrôle la vraisemblance des valeurs de consigne entrées pour le dispositif (10) d'écoulement.

3. Procédé suivant au moins l'une des revendications précédentes, **caractérisé en ce que** l'on contrôle, dans l'unité (30) de gestion, les dispositifs (10) d'écoulement en ce qui concerne les valeurs de consigne transmises.

4. Procédé suivant au moins l'une des revendications précédentes, **caractérisé en ce que** l'écoulement d'ensemble peut être prescrit séparément par l'unité (20) d'entrée et/ou l'unité (30) de gestion et on l'utilise dans l'unité (20) d'entrée, lors de l'entrée des valeurs de consigne, et/ou dans l'unité (30) de gestion, lors de la gestion du dispositif (10) d'écoulement.

5. Procédé suivant au moins l'une des revendications précédentes, **caractérisé en ce qu'**une répétition des stades du procédé surcharge ou surcharge en partie les valeurs de consigne transmises avant la répétition à l'unité (30) de gestion.

6. Procédé suivant au moins l'une des revendications précédentes, **caractérisé en ce que** l'on affiche ou l'on peut afficher les valeurs de consigne de l'unité (20) d'entrée et/ou de l'unité (30) de gestion sur un dispositif (40) d'affichage.

7. Dispositif (100) de gestion d'un stockage de gaz naturel, pour la gestion automatisée de l'utilisation répartie de plusieurs dispositifs (10) d'écoulement, pour la production d'un écoulement d'ensemble d'un fluide dans/ou hors d'un dispositif (200) de stockage, comportant
au moins une unité (20) d'entrée, pour l'entrée de valeurs de consigne pour les dispositifs (10) d'écoulement,
au moins une unité (30) de gestion, à laquelle les valeurs de consigne entrées peuvent être transmises afin de pouvoir effectuer, en fonction de celles-ci, la gestion des dispositifs (10) d'écoulement pour leur commande et/ou régulation,
dans lequel ce dispositif est constitué pour l'exécution d'un procédé ayant les caractéristiques d'un procédé suivant les revendications 1 à 6.

8. Système de stockage de gaz naturel ayant un dispositif (100) de gestion suivant la revendication 7.
